# EUROPÄISCHE PATENTSCHRIFT

(11) **EP 2 936 397 B1**
(45) Veröffentlichungstag und Bekanntmachung des Hinweises auf die Patenterteilung: **02.08.2017**
(21) Anmeldenummer: 13795482.2
(22) Anmeldetag: 25.11.2013
(51) Int. Cl.: G06K 19/077

(54) **VERFAHREN ZUR HERSTELLUNG EINES INLAYS SOWIE INLAY FÜR EINEN FOLIENVERBUND FÜR EIN WERT- ODER SICHERHEITSDOKUMENT**
METHOD FOR PRODUCING AN INLAY AND INLAY FOR A FILM COMPOSITE FOR A VALUABLE DOCUMENT OR SECURITY DOCUMENT
PROCÉDÉ DE FABRICATION D'UNE INCRUSTATION ET INCRUSTATION POUR UN ENSEMBLE DE FEUILLES POUR UN DOCUMENT DE VALEUR OU DE SÉCURITÉ

(30) Priorität: 20.12.2012 DE 102012112726
(43) Veröffentlichungstag der Anmeldung: 28.10.2015
(73) Patentinhaber: Bundesdruckerei GmbH, 10969 Berlin (DE)
(72) Erfinder: FERBER, Alexander, 12105 Berlin (DE); MUTH, Oliver, 12277 Berlin (DE); KLOESER, Joachim, 10779 Berlin (DE)
(74) Vertreter: Mammel und Maser
(86) Internationale Anmeldenummer: PCT/EP2013/074551
(87) Internationale Veröffentlichungsnummer: WO 2014/095232

(56) Entgegenhaltungen:
- DE-A1-102011 001 722
- US-A1- 2008 277 484

## Beschreibung

Die Erfindung bezieht sich auf ein Verfahren zur Herstellung eines Inlays für einen Folienverbund, insbesondere ein Inlay für die Weiterverarbeitung zu einem Wert- oder Sicherheitsdokument sowie ein Inlay.

Aus der DE 10 2011 001 722 A1 ist ein Inlay für ein Folienverbund eines Sicherheits- oder Wertdokumentes bekannt, welches eine Trägerfolie aufweist, auf welcher eine Antenne mit wenigstens einer Windung und einem Mikrochip zur Kommunikation mit der Antenne angeordnet ist. Der Mikrochip ist mit einem Klebstoff auf der Trägerfolie fixiert. Nach dem Aufbringen des Mikrochips auf den Klebstoff erstreckt sich zumindest bereichsweise um den Mikrochip ein Klebstoffmeniskus.

Auf der Trägerfolie ist eine Ausgleichslage vorgesehen, welche eine Aussparung umfasst, so dass nach dem Aufbringen der Ausgleichsfolie auf der Trägerfolie der Mikrochip und der Klebstoffmeniskus in der Aussparung positioniert sind.

Aus der US 2008/0277484 A1 ist des Weiteren eine Speicherkarte bekannt, welche einen Mikrochip und eine Antenne mit zumindest einer Windung aufweist, wobei der Mikrochip und die Antenne zwischen zwei Schichten angeordnet ist.

Aus der DE 10 2009 032 678 A1 geht ein Verfahren und eine Vorrichtung zur Herstellung eines Inlays für einen Folienverbund sowie ein Folienverbund mit Inlay hervor. Bei diesem Verfahren wird eine Trägerfolie mit einem oder mehreren einander zugeordneten elektrischen Bauelementen einer Bilderfassungseinrichtung zugeführt, wobei die jeweilige Position von einem elektrischen Bauelement - also einem Mikrochip - als Nutzen erfasst wird. Des Weiteren wird eine auf der Trägerfolie aufzubringende Ausgleichsfolie, die mit einer Lasereinrichtung bearbeitet werden kann, zunächst einer Laserschneideinrichtung zugeführt, in der die durch die Bilderfassungseinrichtung erfassten Daten über die Position des jeweiligen elektronischen Bauelementes auf der Trägerfolie an die Laserschneideinrichtung übermittelt werden und die Laserschneideinrichtung zur Herstellung der Aussparung angesteuert wird, so dass die jeweilige Position der elektronischen Bauelemente daran angepasst ist. Dadurch wird die Positionierung der elektronischen Bauelemente innerhalb der Aussparung sichergestellt.

Bei diesem Verfahren werden die Aussparungen in der Ausgleichsfolie derart geschnitten, dass diese an die Kontur des Mikrochips angepasst sind, das heißt, dass die Aussparungen quadratisch oder rechteckig ausgebildet sind. Dabei ist die Größe der Aussparung oftmals zu klein, so dass Bereiche der Ausgleichsfolie auf einem Klebstoffmeniskus aufliegen. Der Klebstoffmeniskus entsteht durch das Aufpressen des Mikrochips auf einen Klebstoff zur Fixierung des Mikrochips zur Antenne, wobei sich überschüssiger Klebstoff seitlich zum Mikrochip erstreckt.

Beim Laminieren des Inlays mit einer auf die Ausgleichslage aufgebrachten Deckschicht kann es in diesem Fall zu einem lokal erhöhten Druck auf den Klebstoff und folglich ein Durchdrücken der Mikrochip/Klebstoff-Kombination durch die Antenne kommen.

Sofern die Aussparung in der Ausgleichsfolie zu groß gewählt wird, um vorstehend beschriebene Beschädigungen zu vermeiden, kann es in den Eckbereichen der Ausgleichsfolie zu einem Fließen der Deckschicht kommen, das eine Beschädigung der auf die Trägerfolie aufgedruckten Antenne zur Folge haben kann.

Der Erfindung liegt deshalb die Aufgabe zugrunde, ein Verfahren zur Herstellung eines Inlays sowie ein Inlay vorzuschlagen, durch welches bei der nachfolgenden Lamination Beeinträchtigungen oder Beschädigungen an dem Mikrochip und/oder der Antenne minimiert werden.

Diese Aufgabe wird durch ein Verfahren zur Herstellung eines Inlays für einen Folienverbund eines Sicherheits- oder Wertdokumentes nach Anspruch 1 gelöst, bei welchem durch die Bildverarbeitungseinrichtung eine Seitenkante oder eine Kontur eines den Mikrochip zumindest bereichsweise umgebenden Klebstoffmeniskus erfasst wird und die Kontur in der Aussparung in der Ausgleichsfolie an die erfasste Kontur des Klebstoffmeniskus angepasst und durch eine Schneideinrichtung, insbesondere Laserschneideinrichtung, eingebracht wird. Erstaunlicherweise hat sich herausgestellt, dass durch die Einbringung einer Aussparung, welche in der Kontur von der Form des Mikrochips abweicht, eine geringere Vorschädigung der Antenne im Bereich des Mikrochips ermöglicht wird. Durch die von der bisher verwendeten, rechteckigen oder quadratischen Kontur der Aussparung abweichende Kontur werden insbesondere die in den Eckbereichen der rechteckigen oder quadratischen Kontur und den Bereichen maximaler Klebstoffausdehnung erzeugten mechanischen Beanspruchungen von der Deckschicht auf die Antenne und/oder Mikrochip reduziert, wodurch eine erhöhte Prozesssicherheit bei der Herstellung solcher Inlays ermöglicht wird.

Des Weiteren können weitere Konturen für die Bildung der Aussparung vorgesehen sein, die von einer rechteckigen oder quadratischen Aussparung abweichen. Beispielsweise können Freiformen vorgesehen sein, die an einen Kunststoffmeniskus angepasst sind, der sich aus einer Kontur des aufgetragenen Klebstoffs und dem quadratischen oder rechteckförmigen Mikrochip und dessen relativer Lage zum Klebstoffauftrag nach dem Anpressen und Aufpressen auf den Klebstoff ergibt. Daraus kann eine Form des Klebstoffmeniskus resultieren, welche beispielsweise ein Rechteck mit ausgebeulten Seitenflächen oder mit runden Ecken ausbildet.

Die Aufgabe wird des Weiteren durch eine alternative Ausführungsform des Verfahrens zur Herstellung eines Inlays für einen Folienverbundes eines Sicherheits- oder Wertdokumentes gelöst, bei welchem durch die Bildverarbeitungseinrichtung eine Seitenkante oder eine Kontur des Mikrochips erkannt und der sich daraus ergebende Klebstoffmeniskus als bekannt angenommen wird, und die Aussparung durch eine Schneideinrichtung, insbesondere Laserschneideinrichtung, in die Ausgleichsfolie eingebracht wird. Dadurch können die gleichen Vorteile wie bei der vorstehenden Alternative des Verfahrens erzielt werden. Dabei beruht die als bekannt angenommene Aussparung auf Untersuchungen, bei denen eine definierte Kontur des Mikrochips auf eine vorbestimmte Menge von Klebstoff aufgebracht wurde.

Nach einer bevorzugten Ausgestaltung des Verfahrens ist vorgesehen, dass die als bekannt angenommene oder erfasste Außenkontur des Klebstoffmeniskus zur Herstellung der Kontur der Aussparung übernommen wird oder die Kontur der Aussparung gleich groß, geringfügig größer oder geringfügig kleiner als der Klebstoffmeniskus in die Ausgleichsfolie eingebracht wird. Dies ermöglicht, dass die Aussparung beziehungsweise ein Ausgleichsfenster in der flächigen Erstreckung in alle Richtungen möglichst gering gehalten werden kann, wodurch ein Nachfließen des Materials der Trägeranordnung und/oder der darüber angeordneten Deckschicht während der Lamination verringert wird und somit mögliche Beschädigungen auch wieder verringert werden.

Die der Erfindung zugrunde liegende Aufgabe wird des Weiteren durch ein Inlay für einen Folienverbund eines Sicherheits- oder Wertdokumentes nach Anspruch 3 gelöst, bei dem die Aussparung der Ausgleichsfolie eine ovale oder oktagonförmige Kontur aufweist. Erstaunlicherweise hat sich gezeigt, dass durch eine von der rechteckförmigen oder quadratischen Kontur der bisherigen Aussparung abweichende ovale oder oktagonförmige Kontur Risse oder Brüche, insbesondere in der Antenne nahe der Umgebung des Mikrochips, vermieden beziehungsweise stark minimiert werden können.

Bevorzugt weist die Aussparung eine Kontur auf, die an die Außenkontur des Klebstoffmeniskus angenähert oder angepasst ist. Da sich der Klebstoffmeniskus nicht gleichförmig um den Mikrochip erstreckt, sondern an einzelnen Seitenbereichen einen größeren oder weniger großen Fließbereich aufweist, ermöglicht die Berücksichtigung der Außenkontur des Klebstoffmeniskus den Vorteil, dass die Aussparung im Wesentlichen dem Verlauf der Außenkontur des Klebstoffmeniskus entspricht und dadurch dazwischen liegende, freie Bereiche als auch großflächige Überlappungen gering gehalten oder vermieden werden können, wodurch das Auftreten von Spannungen oder lokalen Drucküberhöhungen bei der nachfolgenden Lamination mit einer Deckschicht vermieden werden.

Bevorzugt weist die Aussparung eine länglich ovale oder länglich oktagonförmige Kontur auf, die den Klebstoffmeniskus umgibt. Diese Konturen haben sich als vorteilhaft gezeigt, um rechteckförmige oder quadratische Gehäuse des Mikrochips zu umgeben.

Bei der Ausgestaltung eines länglichen Oktagons wird dabei bevorzugt die Krümmung der Außenkontur des Klebstoffmeniskus berücksichtigt, so dass die Aussparung in der Ausgleichsfolie den Klebstoffmeniskus möglichst eng umgibt.

Die Aussparung in der Ausgleichsfolie weist bevorzugt eine Kontur auf, die der umlaufenden Außenkontur des Klebstoffmeniskus entspricht oder nur geringfügig größer oder kleiner, je nach Ausprägung des Klebstoffmeniskus, ausgebildet ist. Dies ermöglicht eine optimale Aufnahme und Positionierung des Mikrochips.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Ansicht auf ein Inlay gemäß dem Stand der Technik,
Figur 2 eine schematische Ansicht auf ein erfindungsgemäßes Inlay,
Figur 3 eine schematische Schnittansicht entlang der Linie II-II gemäß Figur 2 und
Figur 4 eine schematische Ansicht auf eine alternative Ausführungsform der Erfindung.

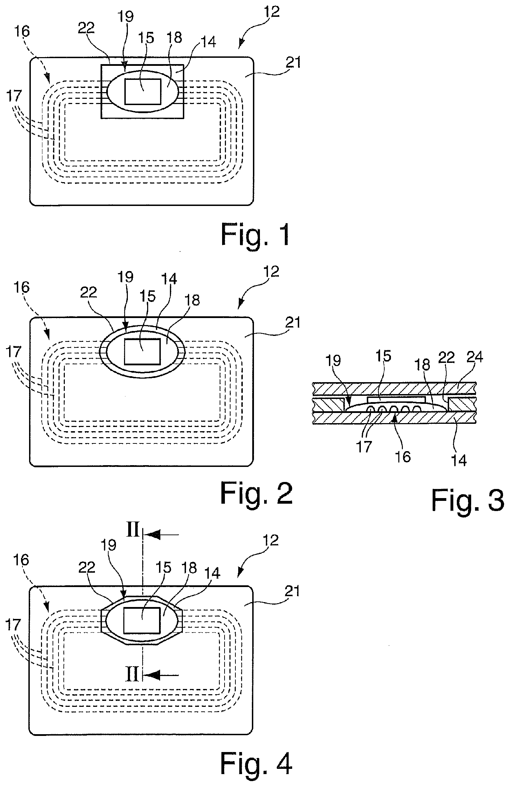

In Figur 1 ist eine schematische Ansicht auf ein Inlay 12 dargestellt, welches nach dem Verfahren gemäß der DE 10 2009 032 678 A1 hergestellt ist, auf welches vollumfänglich Bezug genommen wird. Dieses Inlay 12 umfasst eine Trägerfolie 14, auf der einander zugeordnete elektronische Bauelemente 15, 16, wie beispielsweise ein Mikrochip 15 und eine Antenne 16, aufgebracht sind, wobei die Antenne 16 zumindest eine Windung 17 umfasst. Der Mikrochip 15 weist eine rechteckförmige oder quadratische Form auf. Der Mikrochip 15 ist über einen Klebstoff 18 zur Trägerfolie 14 fixiert. Es wird ein Klebstoffauftrag vorgesehen, so dass der anschließend aufgebrachte Mikrochip 15 vollständig vom Klebstoff 18 unterfüllt ist, wobei seine Oberseite möglichst frei bleiben sollte. Beim Positionieren und Aufdrücken des Mikrochips 15 auf den Klebstoff 18 entsteht ein Klebstoffmeniskus 19, das heißt, dass der Klebstoff 18 gegenüber dem Mikrochip 15 seitlich hervortritt und den Mikrochip 15 umgibt. Der Klebstoffmeniskus 19 weist zumindest eine runde oder ovale Kontur auf. In Abhängigkeit der aufgetragenen Kontur oder dem Muster des Klebstoffs 18, wie beispielsweise einem Klebstoffpunkt, einem Klebstoffkreuz oder einem Klebstoffoval, sowie in Abhängigkeit der Größe des Mikrochips 15 kann ein annähernd ovaler oder aber auch ein rechteckförmig mit Beulen in der Mitte der Seitenkante ausgebildeter Klebstoffmeniskus gebildet werden. Je nach Untergrundbeschaffenheit der Trägerfolie 14 oder der aufgedruckten Antenne 16 auf der Trägerfolie 14 können sich wellenförmige Fließfronten im Klebstoff 18 bilden und den Klebstoffmeniskus in seiner Außenkontur und Form bestimmen.

Auf der Trägerfolie 14 ist eine Ausgleichsfolie 21 aufgebracht. Diese Ausgleichsfolie 21 weist eine Aussparung 22 auf, die in der Form an die Form des Gehäuses des Mikrochips 15 angepasst und deshalb ebenfalls rechteckig ausgeführt ist. Diese Ausgleichsfolie 21 überdeckt mit Ausnahme der Aussparung 22 vollständig die Trägerfolie 14.

Die Trägerfolie 14 besteht beispielsweise aus thermoplastisch verarbeitbaren Polymeren, wie Polyolefinen (Polyethylen, Polypropylen), Polyester, Polycarbonat (PC), Polyvinylchlorid, Polystyrol und Mischungen (Polymerblends, Copolymere, wie beispielsweise Acrylnitril-Butadien-Styrolpolymere, ABS), sowie sonstigen einschlägig bekannten Materialien zur Herstellung von Smartcards, insbesondere aus Polycarbonat (PC) beziehungsweise modifiziertem PC. Die Ausgleichsfolie 21 wird bevorzugt unbedruckt bereitgestellt und besteht aus den für die Trägerfolie 14 genannten thermoplastischen Materialien, insbesondere aus Polycarbonat (PC).

In Figur 2 ist eine schematische Ansicht von oben auf ein erfindungsgemäßes Inlay 12 dargestellt. Dieses Inlay 12 entspricht im Aufbau bezüglich der Trägerfolie 14 der darauf aufgebrachten Antenne 17 und dem Mikrochip 15 mittels des Klebstoffs 18 unter Bildung eines Klebstoffmeniskus 19 sowie der darauf aufgebrachten Ausgleichsfolie 21 gemäß Figur 1.

Abweichend zum Stand der Technik gemäß Figur 1 weist das erfindungsgemäße Inlay eine Ausgleichsfolie 21 auf, bei der die Aussparung 22 abweichend von der Form beziehungsweise Kontur des Mikrochips 15 ausgebildet ist. Gemäß der ersten in Figur 2 dargestellten Ausführungsform weist die Ausgleichsfolie 21 eine ovale Aussparung 22 auf. Bevorzugt folgt der Rand der Aussparung 22 der Außenkontur des Klebstoffmeniskus 19. Dabei kann zwischen dem Rand der Aussparung 22 und dem Klebstoffmeniskus 19 ein geringer Spalt vorgesehen sein. Bevorzugt grenzt der Rand der Aussparung 22 unmittelbar an die Klebstoffkontur 19 an, ohne dabei auf diesem aufzusitzen. Alternativ kann der Rand der Aussparung auch nur gezielt geringfügig aufsitzend bemessen werden.

In Figur 3 ist eine schematische Schnittansicht entlang der Linie II-II gemäß Figur 2 dargestellt. Aus dieser Schnittansicht geht hervor, dass die Ausgleichsfolie 21 vorzugsweise eine Dicke aufweist, die der Höhe des Mikrochips 15 und des Klebstoffs 18 entspricht oder geringfügig höher ist, in welchem der Mikrochip 15 zumindest teilweise eingebettet und befestigt ist. Die Aussparung 22 der Ausgleichsfolie 21 wird beim Weiterverarbeiten nach der Inlayherstellung durch eine Deckschicht 24 geschlossen. Durch die unmittelbar an den Klebstoffmeniskus 19 angrenzende Aussparung 22 wird ermöglicht, dass während der Lamination zumindest der Deckschicht 24 zur Ausgleichsfolie 21 nur geringe Freiräume zwischen dem Klebstoffmeniskus 19 und dem Rand der Aussparung 22 verbleiben, so dass bei einem Fließen der Deckschicht 24 in die Aussparung 22 die Oberfläche der Trägerfolie 14 nicht oder nur geringfügig erreicht oder beeinträchtigt wird. Dadurch kann eine Rissbildung der Antenne 16 in der Chipumgebung vermieden werden. Die Antenne 16 ist bevorzugt durch ein Siebdruckverfahren hergestellt, wodurch zum einen die gedruckte Antenne 16 gegenüber dem erweichten Material der Deckschicht 24 relativ weich ist, so dass bei einem erhöhten Druck durch das erweichte Material der Deckschicht 24 die Risse in der Antenne 16 entstehen können. Zum anderen weist die Antenne 16 aufgrund ihrer Morphologie nur eine geringe Festigkeit gegenüber Zugbelastungen auf und ist auf der Trägerfolie 14 fixiert. Wenn die Trägerfolie 14 weich wird und fließt, fließt die aufgedruckte Antenne 16 einfach mit und reißt. Diese Beeinträchtigungen werden durch die an dem Klebstoffmeniskus 19 angepasste Aussparung vermieden.

In Figur 4 ist eine alternative Ausführungsform des Inlays 12 zu Figur 2 dargestellt. Bei dieser Ausführungsform weist die Ausgleichsfolie 21 eine Aussparung 22 in einer Oktagonform beziehungsweise einer länglichen Oktagonform auf, so dass zwischen einer Außenkontur des Klebstoffmeniskus 19 und der Aussparung 22 ein nur geringer Freiraum verbleibt und die Aussparung 22 teilweise unmittelbar an den Klebstoffmeniskus 19 angrenzt. Bei diesem Ausführungsbeispiel sind die einzelnen Seitenkanten des Oktagons an die beispielhaft oval dargestellte Kontur des Klebstoffmeniskus 19 angepasst, um durch die Aussparung 22 eine quasi enge Einrahmung des Klebstoffmeniskus 19 zu erzielen.

Bevorzugt ist vorgesehen, dass die Aussparung 21 vor dem Laminieren mit zumindest einer Deckschicht 24 nicht mit einer Füll- oder Ausgleichsmasse ausgefüllt wird, sondern dass die Deckschicht 24 unmittelbar die Aussparung 22 überdeckt und teilweise in diese hineinfließen kann.

Die Ausgleichsfolie 21 kann auf der Trägerfolie 14 zumindest bereichsweise und/oder zeitweise befestigt sein.

Zur Herstellung des erfindungsgemäßen Inlays kann ein Verfahren zu dessen Herstellung eingesetzt werden, welches grundsätzlich die Verfahrensschritte gemäß dem in der DE 10 2009 032 678 A1 beschriebenen Verfahren entspricht. Ergänzend ist bei dem erfindungsgemäßen Verfahren vorgesehen, dass die Außenkontur des Klebstoffmeniskus 19 aufgrund der Größe des Mikrochips 15 und der vorbestimmten Form und Menge des Klebstoffauftrags als bekannt angenommen wird oder durch eine Bilderfassungseinrichtung zusätzlich zur Position des Mikrochips 15 die Kontur des Klebstoffmechanismus 19 erfasst und diese als bekannt angenommene oder erfasste Außenkontur und Position an die Laserschneideinrichtung weitergegeben wird, so dass für jeden Mikrochip 15 mit Antenne 16 eine individuell angepasste Aussparung 22 in der Ausgleichsfolie 21 geschnitten wird und jede Aussparung 22 in der Ausgleichsfolie 21 an die Kontur des Klebstoffmeniskus 19 angepasst ist.

Als Wert- oder Sicherheitsdokumente können beispielsweise Smartcards, Pässe, buchartige Personalausweise, Führerscheine, vorläufige Personaldokumente, Zugangsberechtigungen oder dergleichen vorgesehen sein.

Die vorstehend beschriebenen Merkmale sind jeweils für sich erfindungswesentlich und können beliebig miteinander kombinierbar sein.

## Patentansprüche

1. Verfahren zur Herstellung eines Inlays für einen Folienverbund eines Sicherheits- oder Wertdokumentes,
- bei dem eine Trägerfolie (14) mit einem oder mehreren einander zugeordneten elektronischen Bauteilen (15, 16) einer Bilderfassungseinrichtung zugeführt wird, wobei die elektronischen Bauteile (15, 16) zumindest eine Antenne (16) und einen Mikrochip (15) zur Kommunikation mit der Antenne (16) umfassen, die mit einem Klebstoff (18) miteinander verbunden sind,
- bei dem ein auf die Trägerfolie (14) aufbringbare Ausgleichsfolie (21) zunächst einer Schneideinrichtung zugeführt wird, die zum Herstellen von einer oder mehreren Aussparungen (22) in der Ausgleichsfolie (21) eingesetzt wird, wobei die Aussparung an die Position des oder der elektronischen Bauelemente (15, 16) angepasst wird,
- bei dem die Ausgleichsfolie (21) nach dem Herstellen von einer oder mehreren Aussparungen (22) auf die Trägerfolie (14) aufgebracht wird,
**dadurch gekennzeichnet,**
**dass** durch die Bilderfassungseinrichtung eine Kontur eines den Mikrochip (15) zumindest bereichsweise umgebenden Klebstoffmeniskus (19) erfasst oder als bekannt angenommen wird und
**dass** die Kontur der Aussparung (22) in der Ausgleichsfolie (21) an die erfasste oder als bekannt angenommene Kontur des Klebstoffmeniskus (19) angepasst wird.

2. Verfahren nach Anspruch 1, **dadurch gekennzeichnet, dass** die Kontur der Aussparung (22) gleich groß oder geringfügig größer oder geringfügig kleiner als die erfasste Außenkontur des Klebstoffmeniskus (19) in die Ausgleichsfolie (21) eingebracht ist.

3. Inlay für einen Folienverbund eines Sicherheits- oder Wertdokumentes, mit einer Trägerfolie (14), auf welcher wenigstens eine Antenne (16) mit wenigstens einer Windung (17) und wenigstens einem Mikrochip (15) zur Kommunikation mit der Antenne (16) angeordnet ist, wobei ein Mikrochip (15) mit einem Klebstoff (18) auf der Trägerfolie (14) fixiert ist und nach dem Aufbringen des Mikrochips (15) der Klebstoffmeniskus (19) sich zumindest bereichsweise um den Mikrochip (15) erstreckt, mit einer auf der Trägerfolie (14) bereichsweise und/oder zeitweise befestigten Ausgleichslage (21), welche eine Aussparung (22) umfasst, so dass nach dem Aufbringen der Ausgleichsfolie (21) auf der Trägerfolie (14) der Mikrochip (15) und der Klebstoffmeniskus (19) in der Aussparung (22) positioniert sind, **dadurch gekennzeichnet, dass** die Aussparung (22) der Ausgleichsfolie (21) eine ovale oder oktagonförmige Kontur aufweist.

4. Inlay nach Anspruch 3, **dadurch gekennzeichnet, dass** die Aussparung (22) eine Kontur aufweist, die an die Außenkontur des Klebstoffmeniskus (19) angenähert oder angepasst ist.

5. Inlay nach Anspruch 3, **dadurch gekennzeichnet, dass** die Aussparung (22) eine länglich ovale oder länglich oktagonförmige, Kontur aufweist.

6. Inlay nach Anspruch 3, **dadurch gekennzeichnet, dass** die Aussparung (22) der Ausgleichsfolie (21) eine Kontur aufweist, die der Außenkontur des Klebstoffmeniskus (19) entspricht oder nur geringfügig größer oder geringfügig kleiner ausgebildet ist.

## Claims

1. Method for the production of an inlay for a film composite of a security document or document of value,
- wherein a carrier film (14) having one or more electronic components (15, 16) that are allocated to one another, is fed to an image acquisition device, wherein the electronic components (15, 16) comprise at least one antenna (16) and one microchip (15) for communication with the antenna (16), which are connected to each other by an adhesive (18),
- wherein a compensation film (21) that is applied to the carrier film (14) is firstly fed to a cutting device, which is used for the production of one or more recesses (22) in the compensation film (21), wherein the recess is adapted to the position of the electronic component(s) (15, 16),
- wherein the compensation film (21) after having produced one or more recesses (22) therein is provided on the carrier film (14), **characterised in that**,
- a contour of an adhesive meniscus (19) that surrounds the microchip (15) at least in some regions is detected by the image acquisition device, or is assumed to be known, and
- the contour of the recess (22) in the compensation film (21) is adapted to the contour of the adhesive meniscus (19) that is detected or assumed to be known.

2. Method according to claim 1, **characterised in that** the contour of the recess (22) is introduced into the compensation film (21) at the same size as or slightly larger or slightly smaller than the detected outer contour of the adhesive meniscus (19).

3. Inlay for a film composite of a security document or document of value, having a carrier film (14), on which at least one antenna (16) having at least one coil (17) and at least one microchip (15) for communication with the antenna (16) is arranged, wherein a microchip (15) is fixed to the carrier film (14) by an adhesive (18) and, after the application of the microchip (15), the adhesive meniscus (19) extends at least in some regions around the microchip (15), with a compensation layer (21) fastened to the carrier film (14) in some regions and/or intermittently, which layer (21) comprises a recess (22), such that, after the application of the compensation film (21) to the carrier film (14), the microchip (15) and the adhesive meniscus (19) are positioned in the recess (22), **characterised in that** the recess (22) of the compensation film (21) has an oval or octagonal contour.

4. Inlay according to claim 3, **characterised in that** the recess (22) has a contour that is approximated or adapted to the outer contour of the adhesive meniscus (19).

5. Inlay according to claim 3, **characterised in that** the recess (22) has an elongated oval or elongated octagonal, contour.

6. Inlay according to claim 3, **characterised in that** the recess (22) of the compensation film (21) has a contour that corresponds to the outer contour of the adhesive meniscus (19) or is only designed to be slightly larger or slightly smaller than it.

## Revendications

1. Procédé destiné à fabriquer un inlay pour un composite de feuilles d'un document de sécurité ou de valeur, lors duquel
- une feuille support (14) pourvue d'un seul ou de plusieurs composants électroniques conjugués (15, 16) est amenée à un dispositif de saisie d'images, les composants électroniques (15, 16) comprenant au moins une antenne (16) et une puce (15) permettant de communiquer avec l'antenne (16), lesquelles sont assemblées l'une à l'autre à l'aide d'une colle (18),
- une feuille de compensation (21) applicable sur la feuille support (14) est d'abord amenée à un dispositif de coupe, lequel est utilisé pour réaliser un ou plusieurs évidements (22) dans la feuille de compensation (21), l'évidement étant adapté à la position du ou des composants électroniques (15, 16),
- après la réalisation d'un ou de plusieurs évidements (22), la feuille de compensation (21) est appliquée sur la feuille support (14),
**caractérisé en ce que**
un contour d'un ménisque de colle (19) qui entoure la puce (15) au moins par endroits est saisi par le dispositif de saisie d'images ou est considéré comme connu et
le contour de l'évidement (22) ménagé dans la feuille de compensation (21) est adapté au contour du ménisque de colle (19) qui a été saisi ou considéré comme connu.

2. Procédé selon la revendication 1, **caractérisé en ce que** le contour de l'évidement (22) est pratiqué dans la feuille de compensation (21) de manière à être aussi grand ou légèrement plus grand ou légèrement plus petit que le contour extérieur du ménisque de colle (19) qui a été saisi.

3. Inlay pour un composite de feuilles d'un document de sécurité ou de valeur, avec une feuille support (14) sur laquelle est disposée au moins une antenne (16) pourvue d'au moins une spire (17) et d'au moins une puce (15) permettant de communiquer avec ladite antenne (16), une puce (15) étant fixée sur la feuille support (14) à l'aide d'une colle (18) et le ménisque de colle (19) s'étendant, une fois que la puce (15) a été appliquée sur celle-ci, au moins par endroits autour de la puce (15), avec une couche de compensation (21) qui est fixée par endroits et/ou de manière temporaire sur la feuille support (14) et qui comprend un évidement (22) de sorte que la puce (15) et le ménisque de colle (19), une fois que la feuille de compensation (21) a été appliquée sur la feuille support (14), se trouvent positionnés dans l'évidement (22), **caractérisé en ce que** l'évidement (22) ménagé dans la feuille de compensation (21) présente un contour ovale ou octogonal.

4. Inlay selon la revendication 3, **caractérisé en ce que** l'évidement (22) présente un contour qui se rapproche du contour extérieur du ménisque de colle (19) ou qui est adapté à celui-ci.

5. Inlay selon la revendication 3, **caractérisé en ce que** l'évidement (22) présente un contour de la forme d'un ovale allongé ou d'un octogone allongé.

6. Inlay selon la revendication 3, **caractérisé en ce que** l'évidement (22) ménagé dans la feuille de compensation (21) présente un contour qui correspond au contour extérieur du ménisque de colle (19) ou qui n'est que légèrement plus grand ou légèrement plus petit que celui-ci.
